# EUROPEAN PATENT APPLICATION

(11) **EP 4 369 449 A1**
(43) Date of publication of application: **15.05.2024**
(21) Application number: 22904685.9
(22) Date of filing: 08.12.2022
(51) Int. Cl.: H01M 10/052, H01M 4/131, H01M 4/525, H01M 4/505, H01M 4/62, H01M 4/48, H01M 4/36, H01M 4/587

(54) **LITHIUM SECONDARY BATTERY**

(30) Priority: 08.12.2021 KR 20210174498
(71) Applicant: LG Energy Solution, Ltd., Seoul 07335 (KR)
(72) Inventor: KIM, Jeeeun, Daejeon 34122 (KR); SON, Jongin, Daejeon 34122 (KR); CHOI, Jeong Eun, Daejeon 34122 (KR)
(74) Representative: Hoffmann Eitle
(86) International application number: PCT/KR2022/019914
(87) International publication number: WO 2023/106856

(57) **Abstract**

Disclosed is a lithium secondary battery including a positive electrode; a negative electrode; a separator provided between the positive electrode and the negative electrode; and an electrolyte, in which the positive electrode includes a positive electrode current collector and a positive electrode active material layer provided on the positive electrode current collector, and the negative electrode includes a negative electrode current collector and a negative electrode active material layer provided on the negative electrode current collector, in which the positive electrode active material layer includes a positive electrode active material including a lithium composite transition metal compound in a single particle form including nickel, cobalt, and manganese and including 80 mol% or more and less than 100 mol% of nickel in metals except lithium; and a conductive material including multi-walled carbon nanotubes, and in which the negative electrode active material layer includes a negative electrode active material including a silicon-based oxide. A battery module and a battery pack including the lithium secondary battery are also disclosed.

## Description

### [Technical Field]

The present application claims priority to and the benefit of Korean Patent Application No. 10-2021-0174498 filed with the Korean Intellectual Property Office on December 8, 2021, the entire contents of which are incorporated herein by reference.

The present application relates to a lithium secondary battery.

### [Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In the lithium secondary battery, in a state in which an organic electrolyte solution or a polymer electrolyte solution is filled between a positive electrode and a negative electrode each made of an active material capable of intercalation and deintercalation of lithium ions, electrical energy is produced by oxidation/reduction reactions at a time when lithium ions are intercalated/deintercalated into/from the positive electrode and the negative electrode.

Lithium cobalt oxide (LiCoO₂), lithium nickel oxide (LiNiO₂), lithium manganese oxide (LiMnO₂ or LiMn₂O₄, etc.), a lithium iron phosphate compound (LiFePO₄) or the like has been used as a positive electrode active material of the lithium secondary battery. Among these materials, since the lithium cobalt oxide (LiCoO₂) is advantageous in that its operating voltage is high and capacity characteristics are excellent, the lithium cobalt oxide (LiCoO₂) is widely used and is applied as a positive electrode active material for high voltage. However, since there is a limitation in using a large amount of the lithium cobalt oxide as a power source for applications, such as electric vehicles, due to the rising price and unstable supply of cobalt (Co), there emerges a need to develop a positive electrode active material capable of replacing the lithium cobalt oxide.

Accordingly, a nickel cobalt manganese-based lithium composite transition metal oxide (hereinafter, simply referred to as 'NCM-based lithium composite transition metal oxide'), in which a portion of cobalt (Co) is substituted with nickel (Ni) and manganese (Mn), has been developed. Recently, research has been conducted to increase the capacity by increasing a content of Ni in the NCM-based lithium composite transition metal oxide. However, in the case of a Ni-rich positive electrode active material having a high nickel content, there are disadvantages such as a deterioration in thermal stability, an increase in resistance due to an increase in side reactions during an electrochemical reaction, and an increase in gas generation.

Graphite is mainly used as a negative electrode active material of the lithium secondary battery. However, graphite has a low capacity per unit mass of 372 mAh/g, making it difficult to increase the capacity of the lithium secondary battery. Accordingly, in order to increase the capacity of the lithium secondary battery, negative electrode materials such as silicon, tin, and oxides thereof have been developed as non-carbon-based negative electrode materials having higher energy densities than graphite. Although such non-carbon-based negative electrode materials have high capacity, but the initial efficiency is low. Therefore, there are problems in that lithium consumption during initial charging and discharging is high due to low initial efficiency and irreversible capacity loss is large.

### [Detailed Description of the Invention]

### [Technical Problem]

The present inventors have found that optimal battery performance can be realized in a lithium secondary battery designed in a limited space through a specific combination of the types of active materials and conductive materials constituting the positive electrode and the negative electrode, respectively, and the contents of each component, resulting in the present invention.

### [Technical Solution]

An exemplary embodiment of the present application provides a lithium secondary battery including a positive electrode, a negative electrode, and a separator provided between the positive electrode and the negative electrode,
in which the positive electrode includes a positive electrode current collector and a positive electrode active material layer provided on the positive electrode current collector, and the negative electrode includes a negative electrode current collector and a negative electrode active material layer provided on the negative electrode current collector,
in which the positive electrode active material layer includes a positive electrode active material including a lithium composite transition metal compound in a single particle form including nickel, cobalt, and manganese and including 80 mol% or more and less than 100 mol% of nickel in metals except lithium; and a conductive material including multi-walled carbon nanotubes, and
in which the negative electrode active material layer includes a negative electrode active material including a silicon-based oxide.

According to a further exemplary embodiment of the present application, in the lithium secondary battery according to the exemplary embodiment, the multi-walled carbon nanotubes are included in an amount of 0.1 part by weight to 1.5 parts by weight on the basis of 100 parts by weight of the positive electrode active material layer.

According to a further exemplary embodiment of the present application, in the lithium secondary battery according to the exemplary embodiment, the silicon-based oxide is included in an amount of 4 parts by weight to 15 parts by weight on the basis of 100 parts by weight of the negative electrode active material included in the negative electrode active material layer.

Another exemplary embodiment of the present application provides a battery module including the lithium secondary battery and a battery pack including the battery module.

### [Advantageous Effects]

According to the exemplary embodiments described herein, the energy density of the lithium secondary battery designed in a limited space can be increased, and high-output performance and battery cycle performance can be improved.

### [Brief Description of Drawings]

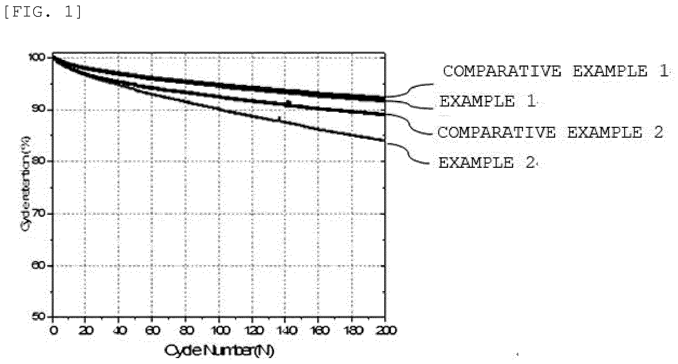

FIG. 1 shows a 40°C cycle graph of batteries manufactured in Examples 1 and 2 and Comparative Examples 1 and 2.

### [Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" and/or "have" when used the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there is no intervening element present. Further, when an element is referred to as being "on" a reference portion, the element is positioned above or below the reference portion, and it does not necessarily mean that the element is positioned "above" or "on" in a direction opposite to gravity.

A lithium secondary battery according to the exemplary embodiment of the present application includes a positive electrode, a negative electrode, and a separator provided between the positive electrode and the negative electrode, in which the positive electrode includes a positive electrode current collector and a positive electrode active material layer provided on the positive electrode current collector, and the negative electrode includes a negative electrode current collector and a negative electrode active material layer provided on the negative electrode current collector. Here, the positive electrode active material layer includes a positive electrode active material including a lithium composite transition metal compound in a single particle form including nickel, cobalt, and manganese and including 80 mol% or more and less than 100 mol% of nickel in metals except lithium; and a conductive material including multi-walled carbon nanotubes, and the negative electrode active material layer includes a negative electrode active material including a silicon-based oxide.

A lithium secondary battery has a size required depending on its application, and accordingly, should be designed in a limited space. Consumer demands for increased energy density and improved high-output performance are increasing, but when a positive electrode material with high capacity is used, a content of the negative electrode material should be correspondingly increased to adapt to the positive electrode material. Accordingly, there is a limit to increasing battery efficiency in a limited space. In addition, it is necessary to design a positive electrode material having efficiency adapted to the efficiency of the negative electrode material, depending on the type of negative electrode material.

In the above exemplary embodiment of the present invention, a silicon-based oxide is included as a negative electrode active material, and at the same time, a positive electrode material, that is, a positive electrode active material and a conductive material are used in a specific type to adapt to the efficiency thereof. In particular, a lithium composite transition metal oxide in a single particle form including nickel, cobalt, and manganese is used as a positive electrode active material, and contains nickel in an amount of 80 mol% or more and less than 100 mol% in metals except lithium, and at the same time, multi-walled carbon nanotubes are used as a conductive material.

The silicon-based oxide used as a negative electrode active material usually has efficiency of 70% to 90%, that is, a ratio of discharge capacity to charge capacity in the first cycle (5 mV at under charge condition 0.1C, 0.005C cut-off, 1.5 V at discharge condition 0.1C) of a level of 1,000 to 1,600 mAh/g. For the positive electrode active material, a high-capacity material having a relatively high nickel content and a single particle form is used, so that the positive electrode efficiency can be adapted to the efficiency according to the type of the negative electrode active material. Specifically, the present inventors have confirmed that in the case of a lithium composite transition metal oxide having a high nickel content, the powder resistance of single particles is slightly higher than that of secondary particles. Thus, by adopting single particles as a positive electrode active material, the positive electrode efficiency can be adapted to the negative electrode efficiency when the silicon-based oxide is used as the negative electrode active material. However, the present inventors have confirmed that the use of a positive electrode active material in a single particle form can degrade battery cycle characteristics, as compared with the use of a positive electrode active material in a secondary particle form. Thus, in the above exemplary embodiment, by using a specific type of conductive material, i.e., the multi-walled carbon nanotubes, it is possible to implement an appropriate increase in conductivity in the battery, resulting in improvements in the battery cycle performance. The shape of the single particle as the positive electrode active material can be confirmed by measuring the shape with a cross-sectional SEM in an electrode state.

When calculating the percolation threshold, it is possible to derive an approximate content of covering the active material according to the particle sizes of the active material and the conductive material. In this regard, the multi-walled carbon nanotubes can achieve the coverage on the active material in an equivalent level even with a smaller content than carbon black. Since the content of the conductive material can be reduced to obtain the coverage on the active material in the equivalent level, the content of the active material itself for generating capacity is relatively increased, which is useful for increasing the capacity in design. Although it may be somewhat different depending on the active material, about 6.5 to 8 times the content of carbon black relative to the multi-walled carbon nanotubes should be used to achieve a theoretically equivalent coverage on the active material.

According to a further exemplary embodiment of the present application, the lithium composite transition metal compound including nickel, cobalt, and manganese and including 80 mol% or more and less than 100 mol% of nickel in metals except lithium may include a mixture of one or two or more species represented by Chemical Formula 1.

[Chemical Formula 1] LiₐNi_{1-b-c-d}Co_{b}Mn_{c}Q_{d}O_{2+δ}

In the Chemical Formula, Q is any one or more elements selected from the group consisting of Na, K, Mg, Ca, Sr, Ni, Co, Ti, Al, Si, Sn, Mn, Cr, Fe, V and Zr, and 1≤a≤1.5, 0<b≤0.5, 0<c≤0.5, 0≤d≤0.1, 0<b+c+d≤20, and -0.1≤δ≤1.0.

In the lithium composite transition metal oxide of Chemical Formula 1, Li may be included in an amount corresponding to a, that is, 1≤a≤1.5. If a is less than 1, the capacity may be lowered, and if a exceeds 1.5, the particles are sintered in a firing process, making it difficult to manufacture the positive electrode active material. Considering the balance between remarkable improvement in capacity characteristics of the positive electrode active material and the sinterability during the manufacturing of the active material according to the Li content control, Li may be more preferably included in an amount of 1.1≤a≤1.2.

In the lithium composite transition metal oxide of Chemical Formula 1, Ni may be included in an amount corresponding to 1-(b+c+d), for example, 0.8≤1-(b+c+d) <1. When the content of Ni in the lithium composite transition metal oxide of Chemical Formula 1 is 0.8 or more, an amount of Ni enough to contribute to charge and discharge is secured and high capacity can be promoted. The content of Ni, 1-(b+c+d), may be 0.88, preferably 0.9 or more, and more preferably 0.93 or more. Preferably, the content of Ni, 1-(b+c+d), may be 0.99 or less or 0.96 or less.

In the lithium composite transition metal oxide of Chemical Formula 1, Co may be included in an amount corresponding to b, that is, 0<b≤0.5. If the content of Co in the lithium composite transition metal oxide of Chemical Formula 1 exceeds 0.5, there is a concern about cost increase. Considering the remarkable improvement effect in capacity characteristics according to the inclusion of Co, Co may be more specifically included in a content of 0.05≤b≤0.2.

In the lithium composite transition metal oxide of Chemical Formula 1, Mn may be included in a content corresponding to c, that is, a content of 0<c≤0.5. If c in the lithium composite transition metal oxide of Chemical Formula 1 exceeds 0.5, there is a concern that the output characteristics and capacity characteristics of the battery will be instead deteriorated, and Mn may be more specifically included in a content of 0.05≤c≤0.2.

In the lithium composite transition metal oxide of Chemical Formula 1, Q may be a doping element included in a crystal structure of the lithium composite transition metal oxide, and Q may be included in a content corresponding to d, that is, 0≤d≤0.1. Q may be one or two or more selected from Na, K, Mg, Ca, Sr, Ni, Co, Ti, Al, Si, Sn, Mn, Cr, Fe, V, and Zr, and for example, Q may be Al.

In the present application, the single particle is a term used to distinguish the same from a positive electrode active material particle in a secondary particle form resulting from aggregation of tens to hundreds of primary particles generally used in the related art, and is a concept including a single particle consisting of one primary particle and an aggregate particle of 10 or less primary particles.

In the exemplary embodiment of the present application, an average particle diameter (D₅₀) of the single particles may be 1 um to 10 um, preferably 2 um to 7 um, and for example 3 um to 7 um.

Even when the single particles are formed to have a small average particle diameter (D₅₀) of about 1 um to 10 µm, the particle strength may be excellent. For example, the positive electrode active material in the single particle form may have a particle strength 100 MPa to 300 MPa during roll-pressing with a force of 650 kgf/cm².

Accordingly, even when the positive electrode active material in the single particle form is roll-pressed with a strong force of 650 kgf/cm², the increase of microparticles in an electrode due to particle breakage is alleviated, thereby improving the lifespan characteristics of the battery.

The method of forming the lithium composite transition metal oxide in the single particle form is not particularly limited. However, generally, the lithium composite transition metal oxide may be formed by over-firing with raised firing temperature, or may be manufactured by using additives such as grain growth promoters that help over-firing, or by changing a starting material.

According to a further exemplary embodiment of the present application, in the lithium secondary battery according to the exemplary embodiment, the lithium composite transition metal compound in the single particle form including nickel, cobalt, and manganese and including 80 mol% or more and less than 100 mol% of nickel in metals except lithium may be 90 parts by weight to 100 parts by weight, for example, 100 parts by weight, of 100 parts by weight of the positive electrode active material included in the positive electrode active material layer.

In the exemplary embodiment of the present application, the positive electrode active material layer may further include a positive electrode active material in a secondary particle form, and a content thereof may be 10 parts by weight or less of 100 parts by weight of the positive electrode active material included in the positive electrode active material layer. Thereby, the above-described effects resulting from the positive electrode active material in the single particle form can be maximized. In the case in which the positive electrode active material in the secondary particle form is included, the components thereof may be the same as those exemplified in the single-particle positive electrode active material described above, but may mean an aggregate form of single particles.

According to a further exemplary embodiment of the present application, in the lithium secondary battery according to the exemplary embodiment, the multi-walled carbon nanotubes may be included in an amount of 0.1 part by weight to 1.5 parts by weight, and preferably, 0.7 part by weight to 1.5 parts by weight on the basis of 100 parts by weight of the positive electrode active material layer. When the content of the multi-walled carbon nanotubes is 0.1 parts by weight or more, a significant effect can be confirmed on improvement in conductivity resulting from the addition of a conductive material. As the content of the conductive material increases, the electrode resistance can be improved. However, the delta % for the improvement may be gradually saturated, so that the content is preferably 1.5 parts by weight or less. In particular, when the content of the multi-walled carbon nanotubes is 0.6 part by weight or more, preferably 0.7 part by weight or more, a significant effect can be confirmed on improvement in battery cycle performance.

According to the percolation threshold calculation based on the single-particle positive electrode material (D₅₀: about 4 µm), the minimum content of the multi-walled carbon nanotubes for coverage on the surface of the active material is 0.7 part by weight, and the multi-walled carbon nanotubes of this content or more are advantageous in improving the characteristics of semi-finished products such as powder resistance, electrode resistance, adhesive force, etc., and the battery cycle performance. According to one example, the content of the multi-walled carbon nanotubes may be 0.6 part by weight or more, and may be 0.6 part by weight to 0.8 part by weight.

According to the exemplary embodiment of the present application, a weight ratio of the lithium composite transition metal compound in the single particle form to the multi-walled carbon nanotubes is 100 or more and 150 or less. The weight ratio of the lithium composite transition metal compound in the single particle form to the multi-walled carbon nanotubes may be 105 or more, 110 or more, 115 or more, or 120 or more. The weight ratio of the lithium composite transition metal compound in the single particle form to the multi-walled carbon nanotubes may be 145 or less, 140 or less, 135 or less, 130 or less, or 125 or less. When the above range is satisfied, it is advantageous in improving the battery cycle performance as well as powder resistance, electrode resistance, adhesive force, etc.

The specific surface area (BET) of the multi-walled carbon nanotubes is 100 m²/g to 300 m²/g, 150 m²/g to 230 m²/g, 170 m²/g to 200 m²/g, and 185 m²/g. A bulk density of the multi-walled carbon nanotubes is 0.01 m²/g to 0.3 g/cm³, 0.05 m²/g to 0.2 g/cm³, 0.1 m²/g to 0.15 g/cm³, and 0.12 g/cm³. A diameter of the multi-walled carbon nanotubes may be 10 nm to 100 nm, and a length of the multi-walled carbon nanotubes may be 1 um or less, and preferably 1 nm or more and 1 um or less.

If necessary, an additional conductive material may be used, in addition to the multi-walled carbon nanotubes. As the additional conductive material, graphite-based, single wall CNT, a few wall CNT or the like may be used. When using the additional conductive material, the additional conductive material may be used within a range of more than 0 part by weight and 5 parts by weight or less on the basis of 100 parts by weight of the positive electrode active material layer. A graphite-based conductive material may have, for example, a specific surface area (BET) of 5 m²/g to 20 m²/g, 10 m²/g to 15 m²/g, and for example 13.5 m²/g, and may have a powder form having a particle diameter D₅₀ of 3.1 um to 4.1 um. The graphite-based conductive material may increase rollability by providing a slip effect between active materials.

According to a further exemplary embodiment of the present application, in the lithium secondary battery according to the exemplary embodiment, the positive electrode active material layer may include a positive electrode binder, in addition to the lithium composite transition metal compound in the single particle form and the conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, more preferably 0.5 part by weight or more and 20 parts by weight or less, and for example, 0.5 part by weight to 5 parts by weight or 1 part by weight to 2 parts by weight on the basis of 100 parts by weight of a composition for the positive electrode active material layer.

According to a further exemplary embodiment of the present application, in the lithium secondary battery according to the exemplary embodiment, the silicon-based oxide is included in an amount of 4 parts by weight to 15 parts by weight, preferably 4.5 parts by weight to 15 parts by weight, and more preferably 5 parts by weight to 15 parts by weight of 100 parts by weight of the negative electrode active material included in the negative electrode active material layer. In the case in which a cylindrical battery is used as a secondary battery, the cylindrical size is limited, and therefore, when designing to increase capacity in the same space, it is preferable to use raw materials with high capacity so as to increase energy density. Therefore, it is preferable to use the silicon-based oxide as a negative electrode active material, and as the content of the silicon-based oxide in the negative electrode active material layer increases, high-capacity realization in the same space and high-output design by reduction in thickness of the negative electrode are possible. However, if the thickness of the negative electrode is too thin, it may be difficult to implement processability in a mass production line. In addition, it is preferable to use the aforementioned single particles as the positive electrode active material and to design the efficiency of the positive electrode to be equal to or less than that of the negative electrode. The content of the silicon-based oxide as described above is advantageous in simultaneous achievement of the high capacity, high output characteristics and the processability improvement, and at the same time, is also advantageous in manufacturing a negative electrode having efficiency adapted to the positive electrode active material described above.

The silicon-based oxide included in the negative electrode active material layer may be present in a particle state, and include SiOₓ (0<x<2). SiOₓ (0<x<2) corresponds to a matrix within the silicon-based oxide particle. SiOₓ(0<x<2) may be a form of including Si and SiO₂, and Si may form a phase. That is, x corresponds to a ratio of the number of O to Si included in SiOₓ(0<x<2). When the silicon-based oxide particles include SiOₓ (0<x<2), a discharge capacity of a secondary battery can be improved.

In a further exemplary embodiment of the present application, the silicon-based oxide may further include metal or metal oxide. For example, the silicon-based oxide may further include at least one of Li or Mg or a compound phase thereof.

When the silicon-based oxide includes Mg, Mg may be present as a Mg compound phase. The Mg compound phase may include, for example, at least one selected from the group consisting of Mg silicate, Mg silicide, and Mg oxide. The Mg silicate may include at least one of Mg₂SiO₄ or MgSiO₂. The Mg silicide may include Mg₂Si. The Mg oxide may include MgO.

When the silicon-based oxide includes Li, Li may be present as a Li compound phase. The Li compound phase may be present in a form of at least one of lithium silicate, lithium silicide or lithium oxide. The Li compound phase may be lithium silicate, for example, may be represented by LiₐSi_{b}O_{c} (2≤a≤4, 0<b≤2, 2≤c≤5), and more specifically, may include one or more selected from the group consisting of Li₂SiO₃, Li₂Si₂O₅, Li₃SiO₃, and Li₄SiO₄.

The Mg compound and/or Li compound may be distributed on the surface and/or in the inside of the silicon-based oxide particles in a form of being doped to the silicon-based oxide particles. The Mg compound and/or Li compound may be distributed on the surface and/or in the inside of the silicon-based oxide particles to control volume expansion/contraction of the silicon-based oxide particles to an appropriate level and to prevent damage to the active material. In addition, the Mg compound and/or Li compound may be contained, in terms of lowering a ratio of an irreversible phase (for example, SiO₂) of silicon-based oxide particles to increase the efficiency of the active material.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the Mg element content in the prepared negative electrode active material can be analyzed.

When Mg and/or Li are included in the silicon-based oxide particles, a content of each of Mg and Li may be 0.1 atm% to 20 atm% on the basis of 100 atm% of Si element.

According to the exemplary embodiment, the silicon-based oxide particles may further include a carbon layer provided on at least a portion of the surface thereof.

The carbon layer may cover the entire surface of the silicon-based oxide particle, or may cover only a portion thereof. Conductivity is imparted to the silicon-based oxide particles by the carbon layer, and volume change of the negative electrode active material including the silicon-based oxide particles is effectively suppressed, thereby improving lifespan characteristics of the battery.

In the exemplary embodiment of the present specification, the carbon layer may include at least one of amorphous carbon or crystalline carbon.

The crystalline carbon may further improve conductivity of the silicon-based oxide particles. The crystalline carbon may include at least one selected from the group consisting of fluorene, carbon nanotubes, and graphene.

The amorphous carbon may appropriately maintain the strength of the carbon layer to suppress expansion of the silicon-based oxide particle. The amorphous carbon may be at least one carbide selected from the group consisting of tar, pitch, and other organic materials, or a carbon-based material formed by using a hydrocarbon as a source of chemical vapor deposition.

The carbide of the other organic materials may be an organic carbide selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, etc.

In the exemplary embodiment, the carbon layer may be included in an amount of 1 wt.% to 50 wt.%, specifically 5 wt.% to 45 wt.%, and more specifically 8 wt.% to 40 wt.% on the basis of 100 wt.% of a total of the silicon-based oxide particles. When the above range is satisfied, the conductivity of the negative electrode active material is improved, and the change in volume of the negative electrode active material is easily suppressed during charge and discharge of the battery, thereby improving the lifespan characteristics of the battery.

In the exemplary embodiment, a thickness of the carbon layer may be 1 nm to 500 nm, and specifically 5 nm to 300 nm. When the above range is satisfied, the change in volume of the negative electrode active material is easily suppressed, and the side reaction between the electrolyte solution and the negative electrode active material is suppressed, thereby improving the lifespan characteristics of the battery.

In the case in which the silicon-based oxide particles include Mg and/or Li, they may be manufactured by a method including doping the silicon-based oxide particles with Mg and/or Li.

For example, for the silicon-based oxide particles including Mg, an in-situ doping method may be used. In one example, the step of manufacturing the silicon-based oxide particles including Mg may include a step of vaporizing mixed powders of Si powders and SiO₂ powders and Mg, respectively, and mixing the same to form a mixed gas, and a step of heat-treating the mixed gas at 800°C to 950°C in a vacuum state. As another example, the step of manufacturing the silicon-based oxide particles including Mg may include a step of mixing mixed powders of Si powders and SiO₂ powders and Mg, and vaporizing the mixture to form a mixed gas, and a step of heat-treating the mixed gas at 800°C to 950°C in a vacuum state.

The mixed powders of Si powders and SiO₂ powders may be vaporized by heat treatment at 1,000°C to 1,800°C or 1200°C to 1500°C, and the Mg powders may be vaporized by heat treatment at 500°C to 1,200°C or 600°C to 800°C. By allowing the materials to react in a gas state in this way, Mg can be uniformly distributed in the silicon-based oxide particles. In the silicon-based oxide particles, the Mg compound phase may include the aforementioned Mg silicate, Mg silicide, Mg oxide, or the like. The particle diameters of the silicon-based oxide particles including Mg manufactured by the method described above may be adjusted by a pulverization method such as a mechanical milling method, if necessary.

As a further example, for the silicon-based oxide particles including Li, an ex-situ doping method may be performed. For example, the step of distributing Li to the silicon-based oxide particles may include a step of forming a carbon layer on the surface of the silicon-based oxide particles, and a step of distributing Li to the silicon-based oxide particles having the carbon layer formed thereon.

The step of forming a carbon layer on the surface of the silicon-based oxide particles may be performed by injecting a carbon-based raw material gas such as a methane gas and performing heat treatment in a rotary tube furnace. Specifically, the silicon-based oxide particles are put into a rotary tube furnace, and the temperature is raised to 800°C to 1,150°C, 900°C to 1,050°C or 950°C to 1,000°C at a rate of 3 to 10°C/min, or about 5°C/min, and heat treatment is performed for 30 minutes to 8 hours while rotating the rotary tube furnace and causing argon gas and a carbon-based raw material gas to flow, thereby forming a carbon layer.

The step of distributing Li to the silicon-based oxide particles having the carbon layer formed thereon may be performed by mixing the silicon-based oxide particles on which the carbon layer is formed and lithium metal powders or a lithium precursor, for example, LiOH, Li₂O and, if necessary, performing heat treatment at 400°C to 1200°C. Alternatively, the above step may be performed using an electrochemical method.

If necessary, silicon-based oxide particles including both Mg and Li may also be manufactured by performing both the above-described in-situ doping of Mg and ex-situ doping of Li.

As an example, the method may include a step of forming a carbon layer on at least a portion of the surface of the silicon oxide particles, and doping Mg and Li to the silicon oxide particles having the carbon layer formed thereon.

Before or after forming the carbon layer, the particle diameters of the silicon-based oxide particles may be adjusted by a pulverization method such as a mechanical milling method, if necessary.

The step of forming a carbon layer on the surface of the silicon-based oxide particles may be performed by, for example, injecting a carbon-based raw material gas such as a methane gas and performing heat treatment in a rotary tube furnace. Specifically, the silicon-based oxide particles are put into a rotary tube furnace, and the temperature is raised to 800°C to 1,150°C, 900°C to 1,050°C or 950°C to 1,000°C at a rate of 3 to 10°C/min, or about 5°C/min, and heat treatment is performed for 30 minutes to 8 hours while rotating the rotary tube furnace and causing argon gas and a carbon-based raw material gas to flow, thereby forming a carbon layer.

The step of doping Li and Mg to the silicon-based oxide particles having the carbon layer formed thereon may be performed by mixing the silicon-based oxide particles having the carbon layer formed thereon and a doping material, for example, magnesium metal powders or a magnesium precursor, for example, MgO; and lithium metal powders or a lithium precursor, for example, LiOH, Li₂O and, if necessary, performing heat treatment at 400°C to 1200°C. Alternatively, the above step may be performed using an electrochemical method.

According to another exemplary embodiment of the present invention, the average particle diameter (D₅₀) of the silicon-based oxide particles may be 1 um to 30 um. The average particle diameter (D₅₀) of the silicon-based oxide particles may be specifically 3 um to 20 µm, and more specifically 5 um to 10 um. When the above range is satisfied, a side reaction between the negative electrode active material and the electrolyte solution is controlled, and the discharge capacity and initial efficiency of the battery can be effectively implemented. In the present specification, the average particle diameter (D₅₀) may be defined as a particle diameter corresponding to 50% of the cumulative volume in the particle diameter distribution curve of particles. The average particle diameter (D₅₀) may be measured using, for example, a laser diffraction method. In the laser diffraction method, in general, particle diameters ranging from a submicron range to several millimeters can be measured, and results with high reproducibility and high resolvability can be obtained.

According to another exemplary embodiment of the present invention, the BET specific surface area of the silicon-based oxide particles may be 0.01 m²/g to 150 m²/g. The BET specific surface area of the silicon-based oxide particles is preferably 0.1 m²/g to 100.0 m²/g, particularly preferably 0.2 m²/g to 80.0 m²/g, specifically 0.6 m²/g to 20 m²/g, and more specifically 0.8 m²/g to 15 m²/g. When the above range is satisfied, side reactions between the electrolyte solution and the negative electrode active material can be reduced during charging and discharging of the battery, and thus the lifespan characteristics of the battery can be improved. The BET surface area may be measured by the Brunauer-Emmett-Teller (BET) method. For example, the BET surface area may be measured with BET six-point method by means of a nitrogen gas adsorption method using a porosimetry analyzer (Bell Japan Inc., Belsorp-II mini).

According to another exemplary embodiment of the present invention, the silicon-based oxide particles may further include Si crystal grains. The Si crystal grains may have a particle diameter of 1 nm to 15 nm.

According to a further exemplary embodiment of the present application, in the lithium secondary battery according to the exemplary embodiment, the negative electrode active material may further include a carbon-based active material.

In the exemplary embodiment of the present application, the negative electrode active material may include a carbon-based active material, and specifically, the carbon-based material may be graphite. The graphite may be natural graphite, artificial graphite, or a mixture thereof. The carbon-based active material may be included in an amount of more than 0 part by weight and 85 parts by weight or less on the basis of 100 parts by weight of the total of the negative electrode active material included in the negative electrode active material layer.

According to a further exemplary embodiment of the present application, in the lithium secondary battery according to the exemplary embodiment, the negative electrode active material layer may further include a negative electrode binder, in addition to the silicon-based oxide and the carbon-based active material.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 50 parts by weight or less, for example, preferably 0.3 part by weight or more and 35 parts by weight or less, more preferably 0.5 part by weight or more and 20 parts by weight or less, for example, 0.5 part by weight to 5 part by weight, or 0.9 part by weight to 2 parts by weight on the basis of 100 parts by weight of the negative electrode active material layer.

The negative electrode active material layer may further include a conductive material. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powders; a conductive whisker such as zinc oxide and potassium titanate; a conductive metal oxide such as titanium oxide; a conductive material such as polyphenylene derivative, and the like may be used. The carbon nanotubes may include any one of single-walled, double-walled, and multi-walled carbon nanotubes. A content of the conductive material in the negative electrode active material layer may be 0.1 part by weight to 30 parts by weight, and preferably 0.4 part by weight to 25 parts by weight on the basis of 100 parts by weight of the negative electrode active material layer.

According to the exemplary embodiment of the present application, a weight ratio of the silicon-based oxide to the negative electrode conductive material is 20 or more and 55 or less. The weight ratio of the silicon-based oxide to the negative electrode conductive material may be 21 or more, 22 or more, 23 or more, or 24 or more. The weight ratio of the silicon-based oxide to the negative electrode conductive material may be 49.7 or less, 49.5 or less, 49.3 or less, or 49.1 or less. When the above range is satisfied, it is advantageous in achieving high capacity and high output characteristics and processability improvement at the same time.

According to the exemplary embodiment of the present application, the weight ratio of the lithium composite transition metal compound in the single particle form to the multi-walled carbon nanotubes and the weight ratio of the silicon-based oxide to the negative electrode conductive material are represented by A and B, respectively, and A:B, which is a ratio of A and B, is 2.5:1 to 5:1.

The weight ratio of the lithium composite transition metal compound in the single particle form to the multi-walled carbon nanotubes and the weight ratio of the silicon-based oxide to the negative electrode conductive material are represented by A and B, respectively, and A:B, which is a ratio of A and B, may be 2.5 :1 or greater, 3:1 or greater, or 3.5:1 or greater. The weight ratio of the lithium composite transition metal compound in the single particle form to the multi-walled carbon nanotube and the weight ratio of the silicon-based oxide to the negative electrode conductive material are represented by A and B, respectively, and A:B, which is a ratio of A and B, may be 5 :1 or less, 4.5:1 or less, or 4:1 or less. When the above range is satisfied, the energy density of a lithium secondary battery designed in a limited space can be increased, and high output performance and battery cycle performance can be improved.

In the exemplary embodiment of the present application, the positive electrode may include a positive electrode current collector and a positive electrode active material layer formed on the positive electrode current collector and including the positive electrode active material.

The positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 1 um to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

In the exemplary embodiment of the present application, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the negative electrode current collector. The thickness of the negative electrode current collector may be 1 um to 500 µm. However, the thickness of the negative electrode current collector is not limited thereto.

In the exemplary embodiment of the present application, the thicknesses of the positive electrode and negative electrode active material layers may be 20 um or more and 500 um or less, preferably 30 um to 150 um, and for example, 50 um to 100 um. The thickness of the positive electrode active material layer may be 90% to 110%, and for example, 95% to 105% of the thickness of the negative electrode active material layer, and their thicknesses may be the same. When the thicknesses of the positive electrode and negative electrode active material layers are implemented using the positive electrode and negative electrode active materials described above, the high capacity (high energy density) and high output can be achieved, and in particular, the continuous discharge of 30 A or more can be achieved.

According to the exemplary embodiment, the efficiency of the positive electrode is preferably lower than that of the negative electrode. For example, a ratio of the efficiency of the negative electrode to the efficiency of the positive electrode is greater than 1, and more preferably 1.01 or more. A difference in efficiency between the positive electrode and the negative electrode may be 1% or more, and preferably 1.5% or more. When the positive electrode does not include a separate additive that lowers the efficiency of the positive electrode, the efficiency of the positive electrode may be determined by the efficiency of the single-particle positive electrode active material described above, and the efficiency of the negative electrode may be determined by the content of the silicon-based oxide described above. For example, in the case in which the efficiency of the silicon-based oxide is 82%, the efficiency of the negative electrode described above can be achieved when the content of the silicon-based oxide in the negative electrode active material layer is 13 wt.%. As another example, in the case in which the efficiency of the silicon-based oxide is early 70%, the efficiency of the negative electrode described above can be achieved when the content of the silicon-based oxide in the negative electrode active material layer is about 4.5 wt.%.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or greater layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

A lithium secondary battery according to the exemplary embodiment of the present invention may be a cylindrical battery. The cylindrical battery may mean that a shape of the battery itself including an assembly including a positive electrode, a negative electrode, a separator, and an electrolyte is cylindrical, and specifically, may include a cylindrical can, a battery assembly provided inside the cylindrical can, and a top cap.

A further exemplary embodiment of the present invention provides a battery module including the cylindrical battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Since the lithium secondary battery according to the exemplary embodiments of the present invention stably exhibits excellent discharge capacity, output characteristics, and cycle performance, the lithium secondary battery can be used as a power source of a portable device such as a mobile phone, a laptop computer, and a digital camera as well as a medium to large sized device selected from the group consisting of electric vehicles, hybrid electric vehicles, plug-in hybrid electric vehicles and power storage systems. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Example 1>

A composition for positive electrode active material layer formation including, on the basis of 100 parts by weight of the positive electrode active material layer, 98.04 parts by weight of a lithium composite transition metal compound in the single particle form having a content of 93 mol% of Ni, 5 mol% of Co, and 2 mol% of Mn in metals except lithium, as a positive electrode active material, 1 part by weight of PVDF, as a binder, and a CNT pre-dispersion solution including 0.8 part by weight of multi-walled carbon nanotubes (MWCNT), as a conductive material, and 0.16 part by weight of a dispersant was coated onto an aluminum foil having a thickness of 30 um to a thickness of 80 um in a dried state, which was then dried to manufacture a positive electrode.

A composition for negative electrode active material layer formation including, on the basis of 100 parts by weight of the negative electrode active material layer, 98.10 parts by weight of artificial graphite and natural graphite (7:3 weight ratio, 90 parts by weight on the basis of 100 parts by weight of the negative electrode active material) and SiO (10 parts by weight on the basis of 100 parts by weight of the negative electrode active material), as a negative electrode active material, 1 part by weight of SBR (styrene-butadiene rubber) and CMC (carboxymethyl cellulose), as a binder, and a CNT pre-dispersion solution including 0.5 part by weight of a dispersant and 0.4 part by weight of single-walled carbon nanotubes (CNT) was coated onto a copper foil having a thickness of 15 um to a thickness of 80 um in a dried state, which was then dried to manufacture a negative electrode.

The positive electrode and the negative electrode were laminated with a separator interposed therebetween, and an electrolyte solution (1.3M LiPF₆, VC2/SN (succinonitrile) = 0.5%) was injected, so that a battery was fabricated.

### <Example 2>

A negative electrode was manufactured in the same method as in Example 1, except that, on the basis of 100 parts by weight of the negative electrode active material, 98.10 parts by weight of artificial graphite and natural graphite (7:3 weight ratio, 80 parts by weight on the basis of 100 parts by weight of the negative electrode active material) and SiO (20 parts by weight on the basis of 100 parts by weight of the negative electrode active material) as a negative electrode active material were included.

### <Comparative Example 1>

A positive electrode was manufactured in the same method as in Example 1, except that, on the basis of 100 parts by weight of the positive electrode active material layer, a composition for positive electrode active material layer formation included 93.34 parts by weight of a lithium composite transition metal compound in the single particle form having a content of 93 mol% of Ni, 5 mol% of Co, and 2 mol% of Mn in metals except lithium, as a positive electrode active material, 1 part by weight of PVDF, as a binder, and a CNT pre-dispersion solution including 5.5 parts by weight of carbon black, as a conductive material, and 0.16 part by weight of a dispersant.

### <Comparative Example 2>

A positive electrode was manufactured in the same method as in Example 1, except that, on the basis of 100 parts by weight of the positive electrode active material layer, a content of 60 mol% of Ni, 20 mol% of Co, and 20 mol% of Mn in metals except lithium was included as the positive electrode active material.

The contents of the lithium composite transition metal compound, the conductive material, and SiO (on the basis of 100 parts by weight of the negative electrode active material) in Examples 1 and 2 and Comparative Examples 1 and 2 are shown in Table 1.

**[Table 1]**

| | Positive electrode | Negative electrode | Design capacity | Capacity retention (%) |
|---|---|---|---|---|
| Example 1 | Ni 93% single particle, MW.CNT 0.8% | SiO 10% (Gr 90%) | Target | 92.5% @200^{th} |
| Example 2 | Ni 93% single particle, MW.CNT 0.8% | SiO 20% (Gr 80%) | +6.5% (vs. Target) | 84% @200^{th} |
| Comparative Example 1 | Ni 93% single particle, CB 5.5% | SiO 10% (Gr 90%) | -6% (vs. Target) | 93% @200^{th} |
| Comparative Example 2 | Ni 60% single particle, MW.CNT 0.8% | SiO 10% (Gr 90%) | -12% (vs. Target) | 89% @200^{th} |

In addition, the batteries manufactured in Examples 1 and 2 and Comparative Examples 1 and 2 were subjected to charging and discharging at 40°C to evaluate the capacity retention, and 40°C cycle graphs of the manufactured batteries are shown in FIG. 1.
Charge conditions: 0.25C 4.2 V, 250 mA Cut-off at 40°C
Discharge conditions: 1/3C 2.5 V, cut-off at 40°C

The capacity retention was derived by the following calculation. Capacity retention (%) = (N times discharge capacity/one discharge capacity) × 100

FIG. 1 shows a cycle graph obtained by performing charging and discharging at 40°C, showing a cycle number (N)-capacity retention (%) curve, in which 80% capacity retention should be satisfied during 40°C cycle.

Referring to Table 1, Example 1 includes the lithium composite transition metal compound in the single particle form having a content of 93 mol% of Ni, 5 mol% of Co, and 2 mol% of Mn in metals except lithium, as a positive electrode active material according to the present invention, and 0.8 part by weight of multi-walled carbon nanotubes (MWCNT), as a conductive material, and Comparative Example 1 includes 5.5 parts by weight of carbon black (CB) as a conductive material. It was confirmed that, in Comparative Example 1, the design capacity was reduced relative to Example 1 by 6%, and thus, when using other carbon-based conductive materials, such as carbon black so as to secure the same conductivity as that of the multi-walled carbon nanotubes (MWCNT), the content should be increased, so that there was a loss of 6% in the design capacity. Accordingly, the multi-walled carbon nanotubes can achieve the coverage on the active material at an equivalent level even with a smaller content than carbon black.

Comparative Example 2 includes a content of 60 mol% of Ni, 20 mol% of Co, and 20 mol% of Mn in metals except lithium as a positive electrode active material on the basis of 100 parts by weight of the positive electrode active material layer, and it was confirmed that the design capacity was reduced by 12% relative to Example 1. As a result, it was confirmed that, when the amount of nickel in metals except lithium in the positive electrode active material layer is less than 80 mol%, a sufficient amount of Ni to contribute to charging and discharging was not secured, so that high capacity could not be achieved, and there was a loss of 12% in design capacity.

Example 2 includes 20 parts by weight of SiO and 80 parts by weight of graphite on the basis of 100 parts by weight of the negative electrode active material, in which the content of SiO was two times as much as Example 1. Therefore, it was confirmed that there is an advantage of 6.5% in design capacity relative to Example 1.

Referring to FIG. 1, it was confirmed that the capacity retention during 200 cycles at 40°C was higher in Example 1, as compared with Example 2, and therefore, the cycle performance was more excellent in Example 1. That is, in Example 1, the content of SiO is 1/2 times that of Example 2. Therefore, it can be interpreted that the negative electrode efficiency increases due to the influence of the material according to the reduction in the content of SiO in the negative electrode, so that the negative electrode is used less as the cycle progresses, and the side reactions near SiO according to charging and discharging are reduced and thus the cycle performance is excellent.

## Claims

1. A lithium secondary battery comprising:
a positive electrode;
a negative electrode;
a separator provided between the positive electrode and the negative electrode; and
an electrolyte,
wherein the positive electrode comprises a positive electrode current collector and a positive electrode active material layer provided on the positive electrode current collector, and the negative electrode comprises a negative electrode current collector and a negative electrode active material layer provided on the negative electrode current collector,
wherein the positive electrode active material layer comprises a positive electrode active material comprising a lithium composite transition metal compound in a single particle form comprising nickel, cobalt, and manganese and comprising 80 mol% or more and less than 100 mol% of nickel in metals except lithium; and a conductive material comprising multi-walled carbon nanotubes, and
wherein the negative electrode active material layer comprises a negative electrode active material comprising a silicon-based oxide.

2. The lithium secondary battery of claim 1, wherein the multi-walled carbon nanotubes are included in an amount of 0.1 part by weight to 1.5 parts by weight on the basis of 100 parts by weight of the positive electrode active material layer.

3. The lithium secondary battery of claim 1, wherein the multi-walled carbon nanotubes are included in an amount of 0.7 part by weight to 1.5 parts by weight on the basis of 100 parts by weight of the positive electrode active material layer.

4. The lithium secondary battery of claim 1, wherein the silicon-based oxide in an amount of 4 parts by weight to 15 parts by weight on the basis of 100 parts by weight of the negative electrode active material included in the negative electrode active material layer.

5. The lithium secondary battery of claim 4, wherein the negative electrode active material further comprises a carbon-based active material.

6. The lithium secondary battery of claim 1, wherein the lithium composite transition metal compound in the single particle form comprising nickel, cobalt, and manganese and comprising 80 mol% or more and less than 100 mol% of nickel in metals except lithium is in an amount of 90 parts by weight to 100 parts by weight on the basis of 100 parts by weight of the positive electrode active material included in the positive electrode active material layer.

7. The lithium secondary battery of claim 1, wherein the silicon-based oxide comprises at least one of Mg and Li.

8. The lithium secondary battery of claim 1, wherein the lithium secondary battery is a cylindrical battery.

9. The lithium secondary battery of claim 1, wherein a weight ratio of the lithium composite transition metal compound in the single particle form to the multi-walled carbon nanotubes is 100 or more and 150 or less.

10. The lithium secondary battery of claim 1, wherein a weight ratio of the silicon-based oxide to the negative electrode conductive material is 20 or more and 55 or less.

11. The lithium secondary battery of claim 1, wherein a weight ratio of the lithium composite transition metal compound in the single particle form to the multi-walled carbon nanotubes and a weight ratio of the silicon-based oxide to the negative electrode conductive material are represented by A and B, respectively, and A:B, which is a ratio of A and B, is 2.5:1 to 5:1.

12. A battery module comprising the lithium secondary battery of any one of claims 1 to 11.

13. A battery pack comprising the battery module of claim 12.
